# EUROPEAN PATENT APPLICATION

(11) **EP 3 932 243 A1**
(43) Date of publication of application: **05.01.2022**
(21) Application number: 20183358.9
(22) Date of filing: 01.07.2020
(51) Int. Cl.: A43B 17/14, B29D 35/12, B29D 35/14

(54) **BI-COMPONENT PLASTIC INSOLE OBTAINED BY INJECTION MOLDING**

(71) Applicant: Tacchificio Villa Cortese S.r.l., 20020 Villa Cortese MI (IT)
(72) Inventor: PAGANINI, Alessandro, 20020 Villa Cortese MI (IT); GAZZARDI, Eric, 20020 Villa Cortese MI (IT); CARMINATI, Davide, 24012 Val Brembilla BG (IT)
(74) Representative: Mittler, Andrea

(57) **Abstract**

There is described an injection molding process for making an insole (1) for footwear, consisting of a core (3) and a shell (2), comprising making the core (3) by injection molding, wherein the shell (2) is made by injection overmolding of the core (3) which is completely included into the shell (2). The materials used for making both the core (3) and the shell (2) are thermoplastic.

## Description

The present invention relates to a bi-component plastic insole obtained by injection overmolding.

The traditional insole is a multicomponent item consisting of two or more layers of cellulose or similar material made by pressing, milling, laser, and assembled by gluing. The front part typically consists of one layer alone having low thickness to ensure flexibility, while the rear part is multilayer and thicker for purposes of rigidity. A rectangular metal strip is inserted inside, in the rear part, to ensure increased rigidity, resistance and toughness.

The main criticalities of the item concern the lower productivity achievable, the poor repeatability in terms of features of the manufactured item, the need for complex and costly processing operations and processes, the conformity requirement with respect to certain strict regulations (for example, rule GB-28011/2011 which relates to the metal strip) and curvature and positioning problems due to the presence of the metal strip.

EP-1602294 describes a plastic material insole consisting of a core and a shell. The core is obtained by injection molding and comprises openings for the passage of plastic fluid and holes able to house support pins for a successive overmolding step wherein a polyurethane foam (PU) covers the core made of thermoplastic polyurethane (TPU).

EP-1967086 also describes an overmolding process wherein polyurethane foam partially covers a core.

The solutions proposed in said documents allow increased performance to be obtained in terms of overall absorption of the stresses, but different mechanical properties cannot be accurately defined, in particular in different zones of the insole.

Moreover, molding polyurethane (PU) and related foams disadvantageously requires the use of different presses, in particular a RIM technology press for the foams, which typically involves greater costs and cycle times.

Polyurethane insoles are also difficult to recycle, with disposal problems which are incompatible with a general request for environment-friendly products.

Alternative solutions to polyurethane foams provide making multilayer insoles with overlapping layers, as in CN-102018319, wherein different layers are obtained by injection molding and then assembled. The problem arises of the adhesion between the layers and the localization of the mechanical features.

CN-2016400663 describes a bi-component plastic material insole with dual density. The dosage of the two components is problematic.

It is object of the present invention to carry out an injection molding process to obtain an environmentally friendly bi-component plastic insole, wherein a quick and easily controllable injection molding is achieved to define different mechanical properties in different zones of the insole.

It is a further object of the present invention that the insole is simple to make and affordable.

It is a still further object of the present invention that the insole has improved mechanical performance in terms of support of the shoe structure, stepping and tactile comfort.

According to the invention, said and further objects are achieved by an injection molding process for making an insole for footwear, formed by a core and a shell, comprising making the core by injection molding, wherein the shell is made by injection overmolding of the core which is completely included into the shell, characterized in that the materials used for making both the core and the shell are thermoplastic.

According to the invention, said and further objects are also achieved by an insole for footwear formed by a core and a shell, wherein the shell is made by injection overmolding of the core which is completely included into the shell, characterized in that the materials used for making both the core and the shell are thermoplastic.

Advantageously, the insole made by injection overmolding with thermoplastic materials allows rigidity, resistance and toughness to be obtained in the rear part, and flexibility, compression comfort and softness to the touch, resistance to gluing and resistance to the lateral deformation to be obtained in the front part.

These and other features of the present invention will become more apparent from the following detailed description of a practical exemplary embodiment thereof, shown by way of non-limiting example in the accompanying drawings, in which:

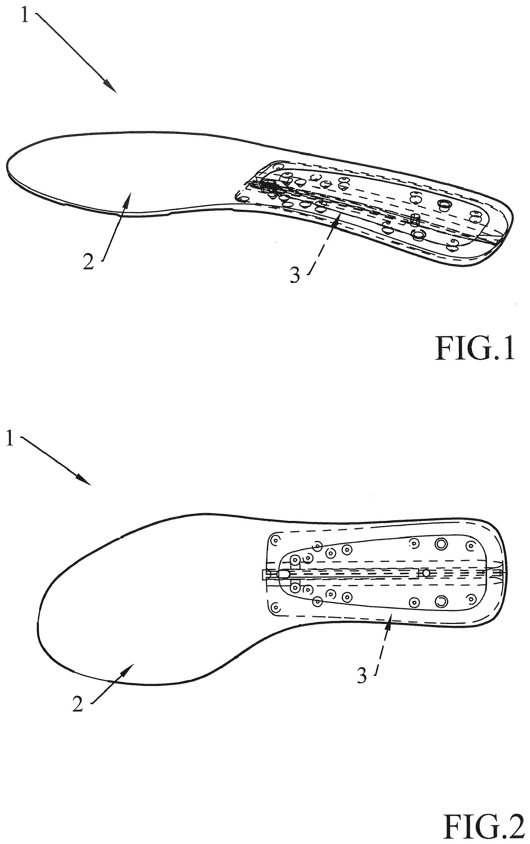

Figure 1 shows a perspective view of an insole according to the present invention;
Figure 2 shows a top plan view of the insole;

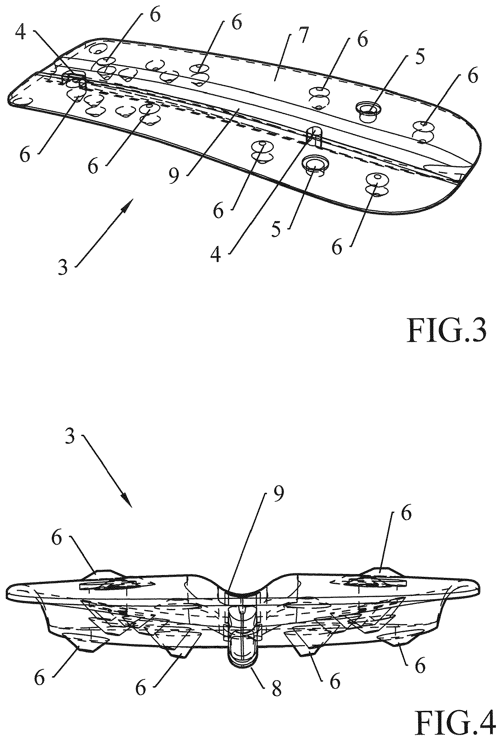

Figure 3 shows a perspective view of a core of the insole;
Figure 4 shows a front view of the core;

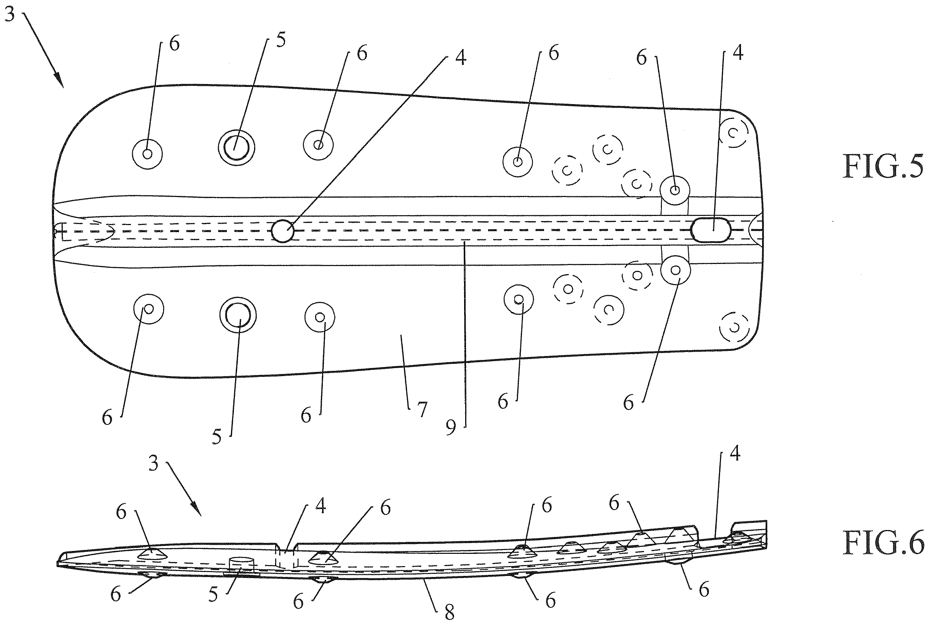

Figure 5 shows a top plan view of the core;
Figure 6 shows a side view of the core.

An insole 1 for footwear consists of a shell 2 and a core 3 which is completely included into said shell 2 by an injection overmolding process.

The core 3 comprises first through holes 4 able to make a seat for the insertion of pins of a mold for forming shell 2 in order to stabilize the position of the core 3 during the overmolding, and second through holes 5 able to facilitate the passage of fluid material in the upper and lower zones of the mold during the overmolding.

The core 3 further comprises spacers 6 able to ensure a sufficient distance between the outer surface 7 of the core 3 and the inner surface of the mold so that the overmolding material easily flows above and especially below the core 3, along the lower part of the outer surface 7 of the core 3, thus incorporating the core 3 more effectively.

The core 3 also comprises a longitudinal rib 8 able to obtain increased rigidity, thus allowing a decrease of the maximum thickness of the core 3. Further transverse ribs not shown in the drawings may increase the rigidity of the core 3.

In order to facilitate the transfer of fluid material during the overmolding step between a middle zone and a rear zone, the core 3 provides a flow channel 9 positioned centrally, on the upper part of the core 3, longitudinal in the extension thereof.

The core 3 is obtained with an injection molding process of a thermoplastic material.

The core 3 is then inserted into the overmolding mold wherein it is held in place by pins which cross the first through holes 4, with the spacers 6 keeping the outer surface 7 of the core 3 sufficiently spaced apart from the walls of the mold so as to cause an efficient flow of the overmolding material forming the shell 2.

The overmolding material is thermoplastic as well.

Once the core 3 is positioned, the thermoplastic fluid is injected from a middle zone of the mold to then flow towards the front and rear zones of the mold.

The second through holes 5 assist in the complete covering of the core 3, while the middle channel 9 promotes the flow of the thermoplastic fluid towards the rear part of the mold.

Once the overmolding of the core 3 is complete, the insole 1, with the shell 2 and the core 3, is cooled and removed.

The thermoplastic materials used to make both the core 3 and the shell 2 are non-loaded or loaded or mixtures with matrixes (bases) of PE (polyethylene), PLA (polylactic acid), PP (polypropylene) and/or byproducts, wherein PE matrixes mainly, but not exclusively, are used for the shell 2 and PLA or PP matrixes mainly, but not exclusively, are used for the core 3. The matrix (base) preferably forms at least 30% of the component, even more preferably at least 50%.

In general, all the components are made with environmentally friendly thermoplastic materials of the "bio-based" type with BCC ≥ 10%, preferably BCC ≥ 50%, processed by "thermoplastic on thermoplastic" overmolding.

BBC means "bio-based carbon content". This is a quantity measurement of the carbon content from renewable origins in a material taken according to regulations ASTM-D6866 and EN-16640 or calculated on the basis of the components of the material itself. It is one of the most used indicators for quantifying the percentage of mass from renewable resources in a material.

The thermoplastic materials preferably used are PLA for the core 3 and HDPE (high-density polyethylene) for the shell 2.

Advantageously, the insole 1 made by injection overmolding is bi-component (dual material), wherein the optimization of each component (material) is carried out in order to obtain:
- rigidity, resistance and toughness in the rear part: the core 3 is preferably made of a material with increased elastic range (Young's modulus between 3000 MPa and 6000 MPa, preferably greater than 3500 MPa), increased yield strength (between 30 MPa and 80 MPa, preferably greater than 40 MPa); the shape of the above-described core 3 is able to minimize the bending deformation and to facilitate the flow of the material for making the shell 2 during the overmolding step;
- flexibility, compression comfort, softness to the touch, resistance to gluing and resistance to the lateral deformation in the front part: the shell 2 is preferably made of a material with a low Young's modulus (between 1 MPa and 1500 MPa, preferably less than 1000 MPa) and hardness greater than 70 Shore (preferably greater than 85 Shore A), or between 25 Shore D and 60 Shore D (preferably greater than 30 Shore D).

In order to improve the compression comfort in specific zones of the sole, a thickness ("cushion") may be added, which is made of a material with low hardness (between 5 Shore A and 40 Shore A, preferably less than 35 Shore A).

The materials used were advantageously selected specifically to effectively replicate the performance of the traditional item.

The thermoplastics used particularly differ, for example, from the applications of PU (polyurethane) foams by typically absorbing the impacts where the structure is given by the other components of the footwear, because they have increased hardness, rigidity and toughness, fundamental features for making possible the post-molding operations (e.g. coverings, gluing, assembly) and for meeting certain existing operational requirements (e.g. lateral and planar structural rigidity during the step).

Additionally, each component/material is designed so as to ensure an effective inter-fastening and transmission of the efforts.

The additional shaping elements (spacers 6, flow channel 9...) are required when the high viscosity of the material being overmolded and/or the shape of the mold are such as to require an additional stabilization of the the core, contrarily, for example, to items made of PU foams.

The advantages with respect to the known joint used of TPU (thermoplastic polyurethane) and PU (polyurethane foam) consist of:
- possibility of using a single injection press for dual-chamber thermoplastics, unlike PU molding ("thermosetting") and related foams, which requires a different RIM technology press, which typically involves increased costs and cycle times;
- recyclability: unlike reaction products like PU, thermoplastics can be brought above the glass transition temperature and reused in new molding processes.

The outer finishing of the shell 2 may alternatively be rough and soft to the touch in order to maximize the post-processability of the item, in particular facilitating and increasing the adhesive resistance of the gluing operations.

## Claims

1. An injection molding process for making an insole (1) for footwear, formed by a core (3) and a shell (2), comprising making the core (3) by injection molding, wherein the shell (2) is made by injection overmolding of the core (3) which is completely included into the shell (2), **characterized in that** the materials used for making both the core (3) and the shell (2) are thermoplastic.

2. A process according to claim 1, **characterized in that** the thermoplastic material comprises a base made of polyethylene or polylactic acid or polypropylene.

3. A process according to claim 2, **characterized in that** the shell (2) comprises a base of, preferably high-density, polyethylene, and the core (3) comprises a base of polylactic acid or polypropylene.

4. A process according to claim 3, **characterized in that** the base forms at least 30% of the shell (2) and/or of the core (3), preferably at least 50%.

5. A process according to any one of the preceding claims, **characterized in that** the core (3) is made with a material with Young's modulus ranging between 3000 MPa and 6000 MPa, preferably greater than 3500 MPa, and yield strength ranging between 30 MPa and 80 MPa, preferably greater than 40 MPa, while the shell (2) is made with a material with Young's modulus ranging between 1 MPa and 1500 MPa, preferably less than 1000 MPa, and hardness greater than 70 Shore, preferably greater than 85 Shore A, or ranging between 25 Shore D and 60 Shore D, preferably greater than 30 Shore D.

6. An insole (1) for footwear formed by a core (3) and a shell (2), wherein the shell (2) is made by injection overmolding of the core (3) which is completely included into the shell (2), **characterized in that** the materials used for making both the core (3) and the shell (2) are thermoplastic.

7. An insole (1) according to claim 6, **characterized in that** the core (3) comprises spacers (6) able to ensure a sufficient distance between the outer surface (7) of the core (3) and the inner surface of the injection mold.

8. An insole (1) according to claim 6 or 7, **characterized in that** the core (3) provides a flow channel (9) positioned centrally, on the upper part of the core (3), longitudinal in the extension thereof.

9. An insole (1) according to claim 7 or 8, **characterized in that** the core (3) comprises first through holes (4) able to make a seat for the insertion of pins of a mold for forming the shell (2), and second through holes (5) able to facilitate the passage of fluid material in the upper and lower zones of the mold during the overmolding.

10. An insole (1) according to any one of claims 6 to 9, **characterized in that** the core (3) comprises a longitudinal rib (8).
